# FASCICULE DE BREVET EUROPEEN

(11) **EP 1 137 595 B1**
(45) Date de publication et mention de la délivrance du brevet: **23.12.2009**
(21) Numéro de dépôt: 99946379.7
(22) Date de dépôt: 01.10.1999
(51) Int. Cl.: C01F 11/18, C08K 3/26, C08K 9/04

(54) **NOUVEAUX REGULATEURS DE RHEOLOGIE DU TYPE CARBONATES DE CALCIUM NATURELS BROYES EVENTUELLEMENT TRAITES AVEC UN ACIDE GRAS OU SON SEL ET LEUR APPLICATION**
NEUE REGULATOREN DER RHEOLOGIE VOM CALCIUMCARBONATTYP, DIE MIT EINER FETTSÄURE ODER IHREM SALZ VORBEHANDELT SEIN KÖNNEN UND IHRE ANWENDUNG
NOVEL RHEOLOGY REGULATORS SUCH AS GROUND NATURAL CALCIUM CARBONATES OPTIONALLY TREATED WITH A FATTY ACID OR SALT AND THEIR USE

(30) Priorité: 07.10.1998 FR 9812714
(43) Date de publication de la demande: 04.10.2001
(73) Titulaire: OMYA DEVELOPMENT AG, 4665 Oftringen (CH)
(72) Inventeur: LOMAN, Henny DI, . (NL); BLANCHARD, Pierre, F-01600 Reyrieux (FR); GYSAU, Detlef, CH-4800 Zofingen (CH); TROUVE, Patrick, F-92140 Clamart (FR)
(74) Mandataire: Richebourg, Michel François
(86) Numéro de dépôt international: PCT/IB1999/001625
(87) Numéro de publication internationale: WO 2000/020336

(56) Documents cités:
- EP-A- 0 384 609
- DE-A- 4 400 566
- DE-A- 19 739 475
- US-A- 3 959 192
- US-A- 5 015 669
- US-A- 5 214 092

## Description

La présente invention concerne le secteur technique des plastisols.

On connaît, dans le domaine, des compositions polymériques chargées ou non, par exemple, les polyuréthannes à terminaison silane qui sont utilisés comme mastics ou adhésifs durcissables à l'humidité.

En présence d'humidité, les groupes silane terminaux subissent de manière connue une réaction d'hydrolyse et de condensation. Il se forme alors un réseau stable siloxane (Si-O-Si).

De tels produits ont de nombreuses applications dans divers domaines industriels tels que l'industrie du transport et du bâtiment.

On a donc recherché des formulations de plus en plus sophistiquées, notamment du type « mono-composant », et capables de s'appliquer sur divers substrats posant des problèmes de plus en plus difficiles à résoudre.

La composition de ce type de formulations comprend une ou plusieurs charges qui peuvent être un ou des carbonates de calcium habituellement qualifiés de « fins ».

Il a été découvert selon l'invention que, de manière surprenante, la sélection d'un carbonate de calcium naturel broyé à une grande finesse, qui sera décrit ci-dessous, ou de ce carbonate de calcium traité également comme décrit ci-dessous, permet d'atteindre un ensemble inégalé de propriétés satisfaisantes pour le produit final. On peut notamment citer une bonne adaptabilité à l'adhérence sur des nombreux types de substrats, comme certains plastiques difficiles, y compris sans couche primaire ou « primer » préalable, une réduction de la quantité nécessaire de polymère (et donc une réduction du coût matières), ou encore une réduction notable du temps de mélange (pouvant atteindre un facteur 1/2 pour chaque étape, ce qui présente un grand intérêt économique évident).

Il est encore plus surprenant de constater que cette amélioration remarquable d'un ensemble de propriétés du produit final ne s'effectue pas, comme l'homme du métier le prévoyait logiquement, au détriment des propriétés mécaniques finales, ou de propriétés comme la résistance aux agents chimiques ou aux rayons UV ou propriétés analogues demandées classiquement à de tels agents.

On connaît également les formulations de type plastisol à base de polychlorure de vinyle (PVC).

On rappellera ici qu'un plastisol désigne une suspension d'une ou plusieurs résines de PVC dans un plastifiant liquide ainsi que des adjuvants tels que charges minérales, stabilisants, pigments minéraux et/ou organiques, agents d'expansion, promoteurs d'adhérence, fluidifiants et autres.
Après gélification thermique, le plastisol prend l'aspect d'une masse compacte plus ou moins souple.

Une des charges minérales habituellement utilisée consiste en un carbonate de calcium synthétique obtenu par voie chimique (carbonate de calcium précipité : PCC) comme par exemple le produit Winnofil SPT Premium^{™} de Zeneca.

Selon l'invention, il est proposé d'utiliser comme matière minérale régulatrice de rhéologie, un carbonate de calcium naturel broyé à une grande finesse en présence ou non d'agent dispersant. Ce carbonate de calcium naturel est choisi parmi la craie, la calcite, le marbre, seul ou en mélange, ou parmi ces mêmes carbonates de calcium traités à l'aide d'au moins un acide gras ou son sel ou leur mélange et préférentiellement à l'aide d'acide stéarique ou son sel tel que notamment le stéarate de calcium, de magnésium, de zinc et très préférentiellement à l'aide de l'acide stéarique ou son sel de calcium, le tout comme décrit plus en détail ci-dessous.

Le produit, régulateur de rhéologie, selon l'invention est **caractérisé en ce qu**'il s'agit d'un carbonate de calcium naturel, de surface spécifique de l'ordre de 14 à 30 m²/g, de préférence 16 à 24 m²/g, et très préférentiellement de l'ordre de 20 m²/g mesurée selon la méthode B.E.T. norme ISO 4652.

Ce carbonate est éventuellement traité par au moins un acide gras ou son sel ou leur mélange, acide qui est un acide contenant 10 à 24 atomes de carbone, et plus particulièrement de l'acide stéarique ou son sel tel que notamment le stéarate de calcium, de magnésium, de zinc et très préférentiellement à l'aide de l'acide stéarique ou son sel de calcium, de préférence à raison de 0,01 % à 5 % en poids et plus préférentiellement de 1 % à 4 % en poids.

On notera ici que par acide stéarique on entend les acides stéariques de qualité industrielle composés principalement de 50 % à 70 % d'acide octadécanoique et de 30 % à 50 % d'acide hexadécanoique.

Un avantage original du produit selon l'invention est que ce produit est un carbonate de calcium qui remplit une fonction de régulateur de rhéologie. Cette fonction est habituellement dévolue aux polymères et aux additifs contenus dans la formulation polymérique tels que par exemple les dépresseurs de viscosité et la Demanderesse a été surprise de la voir remplie par un produit de type matière de charge minérale naturelle de grande finesse.

Le produit sélectionné selon l'invention consiste en un carbonate de calcium naturel broyé très finement en présence ou non d'agent dispersant et éventuellement traité par au moins un acide gras ou son sel ou leur mélange.

Une autre de ses caractéristiques réside dans sa prise d'huile qui est supérieure à 16, mesurée selon la norme ISO 787-V (Rub-out method).

Un carbonate de calcium de surface spécifique de 19 à 26 m²/g a été décrit dans le brevet EP 0 795 588. Il est connu selon ce document comme pigment apportant de la brillance et de l'opacité dans le domaine du papier. Ce domaine d'application est totalement différent. Au surplus, une telle fonction est totalement différente de celle d'une action de régulateur de rhéologie, et rien ne suggérait ni la fonction mise en lumière par l'invention, ni le fait que cette nouvelle application pouvait conduire à un ensemble surprenant de propriétés présentant un très grand intérêt économique.

L'invention concerne l'utilisation, comme régulateur de rhéologie pour la préparation de plastisols de ces carbonates de calcium naturels broyés à une très grande finesse, éventuellement traités à l'aide d'au moins un acide gras ou son sel notamment de calcium, de magnésium, ou de zinc ou leur mélange. Cet acide qui est un acide contenant 10 à 24 atomes de carbone, est plus particulièrement l'acide stéarique ou son sel tel que notamment le stéarate de calcium, de magnésium, de zinc et très préférentiellement l'acide stéarique ou son sel de calcium. Le traitement s'effectue de préférence à raison de 0,01 % à 5 % en poids et plus préférentiellement de 1 % à 4 % en poids d'au moins un acide gras ou son sel ou leur mélange.

D'autres caractéristiques et avantages de l'invention seront mieux compris à la lecture de la description et des exemples qui vont suivre. Ces exemples ne sauraient représenter un quelconque aspect limitatif de l'invention.

### Dans les exemples, les produits présentent les caractéristiques suivantes :

### PRODUIT A :

Charge de l'art antérieur, constituée d'un carbonate de calcium naturel de type craie, broyé et séché, non traité, de diamètre moyen de grain 0,67 micromètre mesuré a l'aide du Sédigraph 5100 de la société Micromeritics, de surface spécifique 11 m²/g mesurée selon la méthode B.E.T. norme ISO 4652.

### PRODUIT B :

Régulateur de rhéologie selon l'invention, constitué d'un carbonate de calcium naturel de type craie, broyé et séché, non traité, de diamètre moyen de grain 0,60 micromètre mesuré a l'aide du Sédigraph 5100 de la société Micromeritics, de surface spécifique 19,5 m²/g mesurée selon la méthode B.E.T. norme ISO 4652 et de prise d'huile égale à 18,75 mesurée selon la norme ISO 787-V (Rub-out method).

### PRODUIT C :

Régulateur de rhéologie selon l'invention, constitué d'un carbonate de calcium naturel de type calcite urgonien, broyé en voie humide et séché, non traité, de diamètre moyen de grain 0,44 micromètre mesuré a l'aide du Sédigraph 5100 de la société Micromeritics, de surface spécifique de 16,5 m²/g mesurée selon la méthode B.E.T. norme ISO 4652 et de prise d'huile égale à 20 mesurée selon la norme ISO 787-V (Rub-out method).

### PRODUIT D :

Régulateur de rhéologie selon l'invention, constitué d'un carbonate de calcium naturel de type craie, broyé en voie humide et séché, traité par la mise en oeuvre de 3 % en poids d'acide stéarique, de diamètre moyen de grain 0,59 micromètre mesuré a l'aide du Sédigraph 5100 de la société Micromeritics, de surface spécifique, après traitement, égale à 16 m²/g mesurée selon la méthode B.E.T. norme ISO 4652 et de prise d'huile, après traitement, égale à 16,3 mesurée selon la norme ISO 787-V (Rub-out method).

### PRODUIT E :

Régulateur de rhéologie selon l'invention, constitué d'un carbonate de calcium naturel de type calcite urgonien, broyé en voie humide et séché, non traité, de diamètre moyen de grain 0,58 micromètre mesuré a l'aide du Sédigraph 5100 de la société Micromeritics, de surface spécifique de 14,4 m²/g mesurée selon la méthode B.E.T. norme ISO 4652 et de prise d'huile égale à 17,9 mesurée selon la norme ISO 787-V (Rub-out method).

### PRODUIT F :

Régulateur de rhéologie selon l'invention, constitué d'un carbonate de calcium naturel de type craie, broyé en voie humide et séché, traité au moyen de 1 % en poids d'acide stéarique, de granulométrie résultante égale à 96 % < 1 micromètre et 39 % < 0,2 micromètre mesuré a l'aide du Sédigraph 5000 de la société Micromeritics, de surface spécifique, après traitement, égale à 28 m²/g mesurée selon la méthode B.E.T. norme ISO 4652 et de prise d'huile, après traitement, égale à 19,5 mesurée selon la norme ISO 787-V (Rub-out method).

### PRODUIT G :

Régulateur de rhéologie selon l'invention, constitué d'un carbonate de calcium naturel de type craie, broyé en voie humide et séché, non traité, de surface spécifique 22 m²/g mesurée selon la méthode B.E.T. norme ISO 4652 et de prise d'huile égale à 19,4 mesurée selon la norme ISO 787-V (Rub-out method).

### PRODUIT H :

Charge de l'art antérieur constituée d'un carbonate de calcium précipité commercialisé par la société Zeneca sous le nom de Winnofil SPT^{™}.

### PRODUIT I :

Charge de l'art antérieur, constituée d'un carbonate de calcium naturel de type craie, broyé en voie humide et séché, traité au moyen de 1 % d'acide stéarique, de diamètre moyen égal à 1,4 micromètre mesuré à l'aide du Sédigraph 5100 de la société Micromeritics et de surface spécifique égale à 6 m²/g mesurée selon la méthode B.E.T. norme ISO 4652.

### PRODUIT J :

Charge de l'art antérieur, constituée d'un carbonate de calcium naturel de type craie, broyé en voie humide et séché, traité par la mise en oeuvre de 1 % en poids d'acide stéarique, de diamètre moyen égal à 1 micromètre mesuré a l'aide du Sédigraph 5100 de la société Micromeritics et surface spécifique 10 m²/g mesurée selon la méthode B.E.T. norme ISO 4652.

### PRODUIT K :

Charge de l'art antérieur constituée d'un carbonate de calcium précipité traité commercialisé par la société Solvay sous le nom de Socal U1S2.

### EXEMPLE 1:

Cet exemple concerne l'utilisation de carbonates de calcium comme régulateur de rhéologie pour la préparation de plastisols.

On a testé dans ces essais le remplacement du carbonate de calcium synthétique obtenu par précipitation, de l'art antérieur, ou carbonate de calcium précipité (PCC) par le carbonate de calcium naturel spécifique selon l'invention.

Dans une formulation type plastisol à base de PVC (chlorure de polyvinyle) ne contenant pas de carbonate de calcium, on a cherché à comparer l'influence de la substitution de 50 % à 100 % de la charge minérale habituellement utilisée à savoir un carbonate de calcium précipité par un carbonate de calcium naturel broyé à une grande finesse selon l'invention.

Pour ce faire, on mélange avec 75 g de plastisol non chargé, le carbonate de calcium à tester dans un récipient de 7 cm de diamètre et on homogénéise à la spatule. On procède ensuite à la mise en dispersion du mélange durant 2 minutes à l'aide d'un appareillage de mélange de laboratoire « Pendraulik »^{™} LD50, le diamètre du disque de mise en dispersion étant de 5 cm, la vitesse de rotation du disque étant 2700 tr/min (réglage manuel en position 3).

La mise en dispersion étant terminée, on effectue la mesure de viscosité à l'aide de l'appareillage « Rheomat 120 »^{™}, appareil de mesure selon la norme DIN 125, à 20°C.

### Essai n° 1 :

Cet essai illustre l'art antérieur et met en oeuvre 20 g d'un carbonate de calcium précipité commercialisé par la société Zeneca sous le nom de Winnofil SPT^{™} (produit H) et 5 g de carbonate de calcium naturel vendu sous le nom Juraperle^{™} BS par la société Juraweiss.

### Essai n° 2 :

Cet essai illustre l'art antérieur et met en oeuvre 13 g d'un carbonate de calcium précipité commercialisé par la société Zeneca sous le nom de Winnofil SPT^{™} (produit H) et 12 g du produit A selon l'invention.

### Essai n° 3 :

Cet essai illustre l'invention et met en oeuvre 25 g du produit B selon l'invention.

### Essai n° 4 :

Cet essai illustre l'art antérieur et met en oeuvre 20 g d'un carbonate de calcium précipité commercialisé par la société Zeneca sous le nom de Winnofil SPT^{™} (produit H).

### Essai n° 5:

Cet essai illustre l'invention et met en oeuvre 10g d'un carbonate de calcium précipité commercialisé par la société Zeneca sous le nom de Winnofil SPT^{™} (produit H) et 15 g du produit D selon l'invention.

### Essai n° 6 :

Cet essai illustre l'invention et met en oeuvre 10 g d'un carbonate de calcium précipité commercialisé par la société Zeneca sous le nom de Winnofil SPT^{™} (produit H) et 15 g du produit C selon l'invention.

### Essai n° 7 :

Cet essai illustre l'invention et met en oeuvre 13 g d'un carbonate de calcium précipité commercialisé par la société Zeneca sous le nom de Winnofil SPT^{™} (produit H) et 12 g du produit E selon l'invention.

### Essai n° 8 :

Cet essai illustre l'invention et met en oeuvre 10 g d'un carbonate de calcium précipité commercialisé par la société Zeneca sous le nom de Winnofil SPT^{™} (produit H), 5 g de carbonate de calcium naturel vendu sous le nom Juraperle^{™} BS par la société Juraweiss et 10 g du produit D selon l'invention.

### Essai n° 9 :

Cet essai illustre l'invention et met en oeuvre 10 g d'un carbonate de calcium précipité commercialisé par la société Zeneca sous le nom de Winnofil SPT^{™} (produit H), 5 g de carbonate de calcium naturel vendu sous le nom Juraperle^{™} BS par la société Juraweiss et 10 g du produit E selon l'invention.

### Essai n° 10 :

Cet essai illustre l'invention et met en oeuvre, pour un mélange avec 72 g de plastisol, 10 g d'un carbonate de calcium précipité commercialisé par la société Zeneca sous le nom de Winnofil SPT^{™} (produit H), 5 g de carbonate de calcium naturel vendu sous le nom Juraperle^{™} BS par la société Juraweiss et 13 g du produit E selon l'invention.

Les résultats des mesures de viscosité en fonction de la vitesse d'écoulement selon la norme DIN 125 à 20°C sont rassemblés dans les tableaux Ia et Ib ci-après.

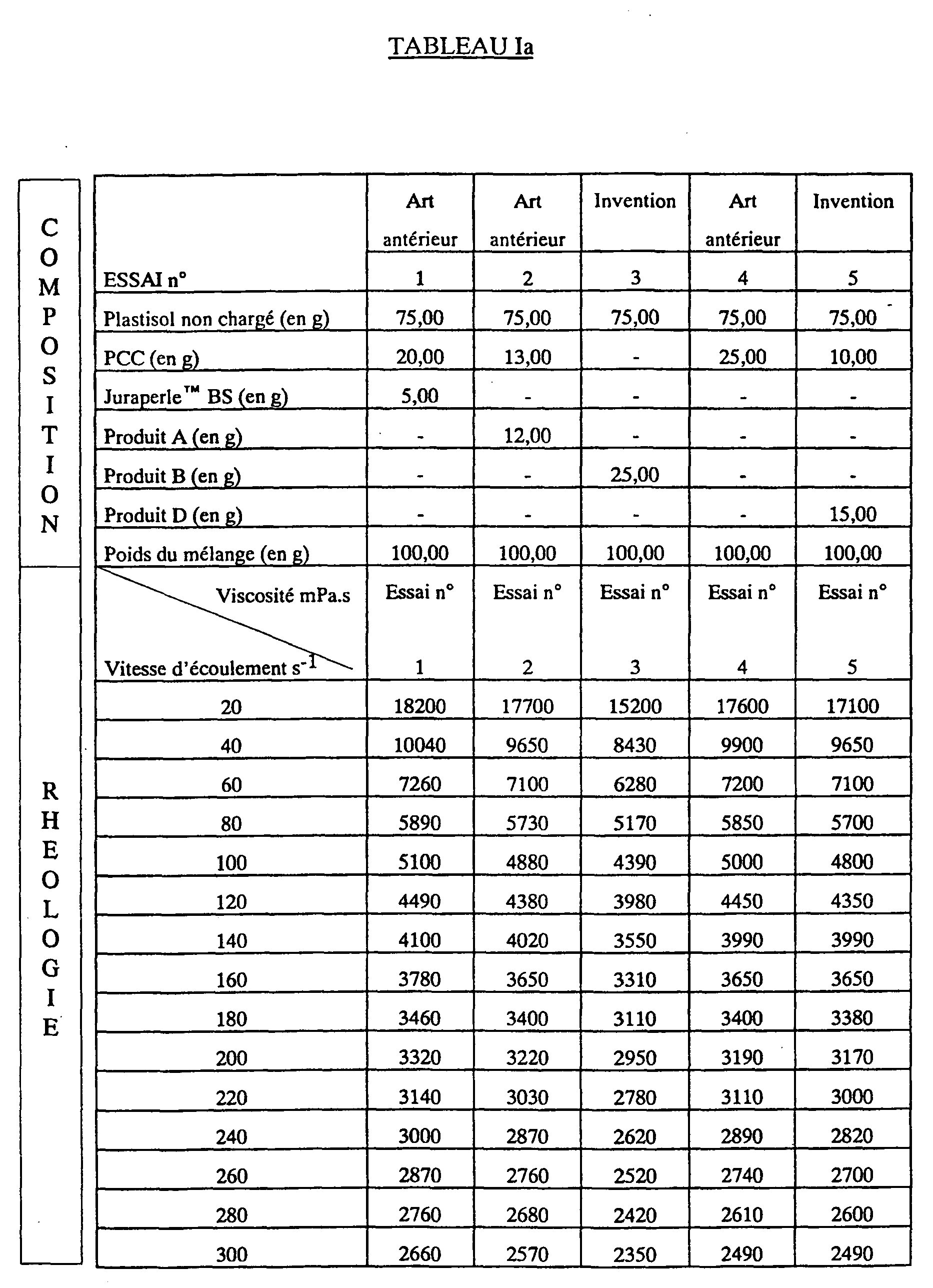

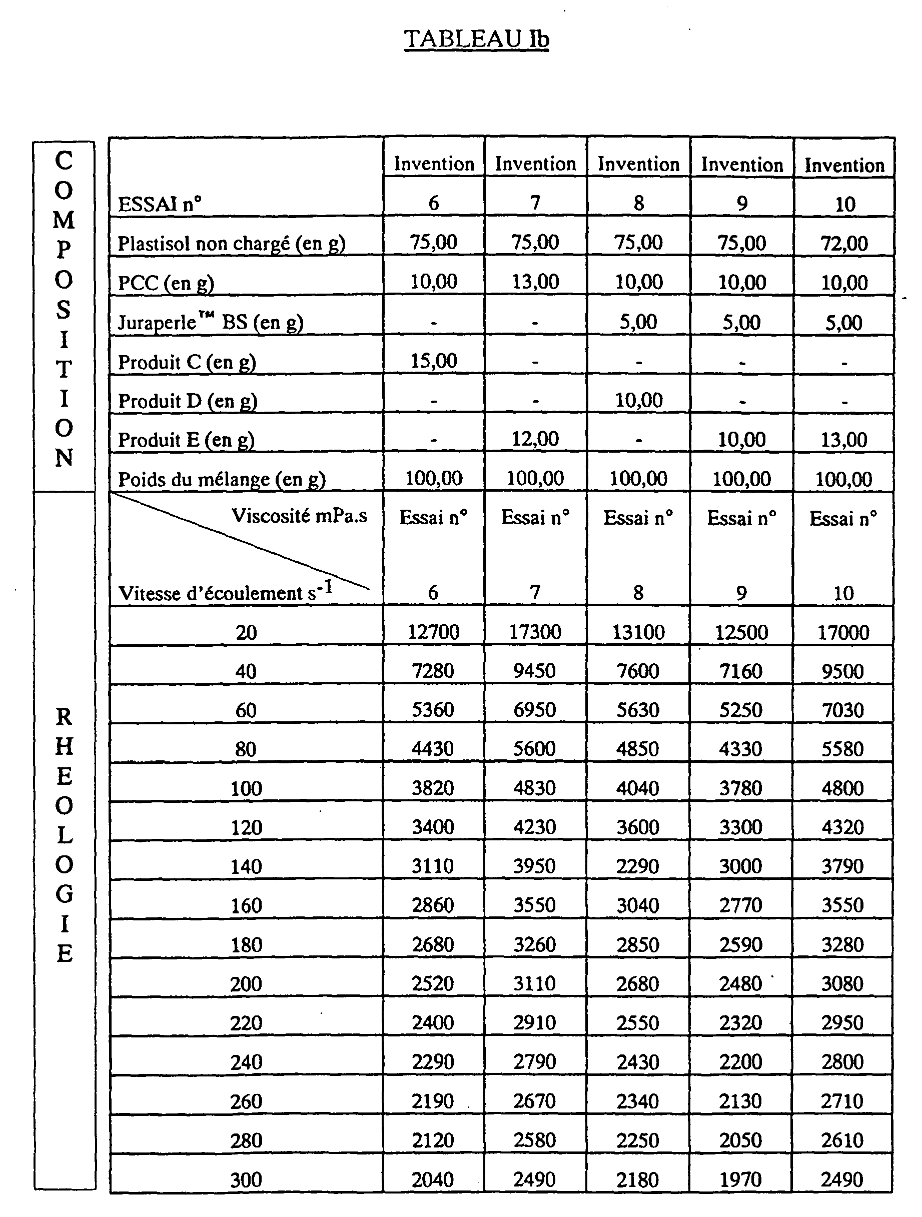

La lecture du tableau permet de voir que l'utilisation du carbonate de calcium selon l'invention permet de réguler le comportement rhéologique de la composition plastisol, même lorsque 100 % du carbonate de calcium précipité a été remplacé par le carbonate de calcium selon l'invention.

### EXEMPLE 2 :

Cet exemple concerne l'étude des propriétés mécaniques classiques conférées par le produit F selon l'invention, soit une craie naturelle broyée de manière à obtenir une surface spécifique de 28 m²/g, à des mélanges à base de PVC plastifié, en comparaison des mélanges chargés à l'aide de carbonates de calcium naturels bien connus de l'art antérieur.

Pour chacun des essais, on a réalisé le mélange suivant :

| | |
|---|---|
| PVC « SOLVIC 239 D » commercialisé par la société Solvay | 100 |
| Phtalate de dioctyle (Jayflex^{™} DOP de Exxon) | 50 |
| Sulfate dibasique de plomb | 1 |
| Sulfate tribasique de plomb | 2 |
| Charge à tester | 80 |

### Préparation de la composition :

Les mélanges secs ou « dry-blends » sont préparés au mélangeur adiabatique « GUEDU »^{™}, à 100°C durant une période de 15 minutes. Les mélanges sont ensuite gélifiés sur cylindres à 150°C au malaxeur à cylindre. Pour tous les mélanges, cette opération s'est effectuée en 12 minutes.

Des plaques de 90 x 90 x 2 mm ont ensuite été moulées à 160°C après préchauffage de l'ébauche durant 3 minutes et mise sous pression durant 2 minutes avant refroidissement, à l'aide d'une presse à compression.

Les éprouvettes nécessaires à la détermination des propriétés mécaniques ont été découpées dans ces plaques.

### Les différents carbonates de calcium testés sont :

### Essai n° 11 :

Cet essai illustre l'art antérieur et met en oeuvre une craie naturelle, traitée avec 1 % d'acide stéarique, de surface spécifique 6 m2/g mesurée selon la méthode B.E.T norme ISO 4652 (produit I).

### Essai n° 12 :

Cet essai illustre l'art antérieur et met en oeuvre une craie naturelle, traitée avec 1 % d'acide stéarique, de surface spécifique 10 m2/g mesurée selon la méthode B.E:T. norme ISO 4652 (produit J).

### Essai n° 13 :

Cet essai illustre l'invention et met en oeuvre le produit F selon l'invention.

Les propriétés mécaniques sont appréciées par les essais dynamométriques (résistance à la rupture, allongement à la rupture, module 100 %) effectués par la mise en oeuvre de l'appareillage Instron^{™} selon la norme ISO 37, à une température de 23°C et pour une vitesse de traction de 10 cm/min.

La résistance au déchirement ASTM-C est, elle, déterminée selon la méthode de la norme ISO R-34 et la dureté Shore C selon la méthode de la norme ISO 868.

Les résultats de ces mesures de propriétés mécaniques sont rassemblés dans le tableau II ci-après.

**TABLEAU II**

| Essai n° | Art antérieur | Art antérieur | Invention |
|---|---|---|---|
| | 11 | 12 | 13 |
| Résistance à la rupture (daN/cm²⁾ | 128 | 130 | 136 |
| Allongement à la rupture (%) | 300 | 260 | 172 |
| Module 100 % (daN/cm²⁾ | 83 | 106 | 127 |
| Résistance au déchirement ASTM-C (daN/cm) | 47 | 56 | 58 |
| Dureté Shore C à 15 s (en daN/cm) | 60 | 64 | 74 |

On voit que les propriétés mécaniques obtenues sont excellentes et sont supérieures à celles obtenues avec des carbonates de calcium naturels broyés mais de surface spécifique hors du domaine de l'invention.

L'invention permet donc d'optimiser les formulations en fonction de la propriété mécanique à privilégier.

## Revendications

1. Utilisation, comme régulateur de rhéologie de plastisol, d'un carbonate de calcium **caractérisé en ce qu'**il s'agit d'un carbonate de calcium naturel, broyé à une grande finesse, de surface spécifique de l'ordre de 14 à 30 m²/g, de préférence de l'ordre de 16 à 24 m²/g et très préférentiellement de l'ordre de 20 m²/g, mesurée selon la méthode B.E.T. norme ISO 4652.

2. Utilisation comme régulateur de rhéologie d'un carbonate de calcium selon la revendication 1, **caractérisé en ce qu'**il s'agit d'un carbonate de calcium naturel, broyé à une grande finesse, de surface spécifique de 14,4 m²/g mesurée selon la méthode B.E.T. norme ISO 4652.

3. Utilisation comme régulateur de rhéologie d'un carbonate de calcium selon la revendication 1, **caractérisé en ce qu'**il s'agit d'un carbonate de calcium naturel, broyé à une grande finesse, de surface spécifique de 16 m²/g mesurée selon la méthode B.E.T. norme ISO 4652.

4. Utilisation comme régulateur de rhéologie d'un carbonate de calcium elon la revendication 1, **caractérisé en ce qu'**il s'agit d'un carbonate de calcium naturel, broyé à une grande finesse, de surface spécifique de 16,5 m²/g mesurée selon la méthode B.E.T. norme ISO 4652.

5. Utilisation comme régulateur de rhéologie d'un carbonate de calcium selon la revendication 1, **caractérisé en ce qu'**il s'agit d'un carbonate de calcium naturel, broyé à une grande finesse, de surface spécifique de 22 m²/g mesurée selon la méthode B.E.T. norme ISO 4652.

6. Utilisation comme régulateur de rhéologie d'un carbonate de calcium selon la revendication 1, **caractérisé en ce qu'**il s'agit d'un carbonate de calcium naturel, broyé à une grande finesse, de surface spécifique de 28 m²/g mesurée selon la méthode B.E.T. norme ISO 4652.

7. Utilisation comme régulateur de rhéologie d'un carbonate de calcium selon l'une quelconque des revendications 1 à 6, **caractérisé en ce qu'**il s'agit d'un carbonate de calcium naturel traité à l'aide d'au moins un acide gras contenant 10 à 24 atomes de carbone son sel choisi parmi les sels de calcium, de magnésium, de zinc ou leur mélange et plus particulièrement à l'aide d'acide stéarique ou son sel de calcium dans une proportion de l'ordre de 0,01 % à 5 % en poids.

8. Utilisation comme régulateur de rhéologie d'un carbonate de calcium selon la revendication 7, **caractérisé en ce qu'**il s'agit d'un carbonate de calcium naturel traité à l'aide d'au moins un acide gras contenant 10 à 24 atomes de carbone ou son sel choisi parmi les sels de calcium, de magnésium, de zinc ou leur mélange et plus particulièrement à l'aide d'acide stéarique ou son sel de calcium dans une proportion de l'ordre de 1 % à 4 % en poids.

9. Utilisation comme régulateur de rhéologie d'un carbonate de calcium selon l'une quelconque des revendications 1 à 8, **caractérisé en ce qu'**il présente une prise d'huile qui est supérieure à 16 mesurée selon la norme ISO 787-V (Rub-out method).

## Claims

1. Use of a calcium carbonate as a rheology regulator for plastisols, wherein this is a natural calcium carbonate, ground to a high degree of fineness, with a specific surface area in the region of 14 to 30 m²/g, preferably in the region of 16 to 24 m²/g and more preferably in the region of 20 m²/g, measured using the BET method in accordance with standard ISO 4652.

2. Use of a calcium carbonate as a rheology regulator according to claim 1, wherein this is a natural calcium carbonate, ground to a high degree of fineness, with a specific surface area of 14.4 m²/g, measured using the BET method in accordance with standard ISO 4652.

3. Use of a calcium carbonate as a rheology regulator according to claim 1, wherein this is a natural calcium carbonate, ground to a high degree of fineness, with a specific surface area of 16 m²/g, measured using the BET method in accordance with standard ISO 4652.

4. Use of a calcium carbonate as a rheology regulator according to claim 1, wherein this is a natural calcium carbonate, ground to a high degree of fineness, with a specific surface area of 16.5 m²/g, measured using the BET method in accordance with standard ISO 4652.

5. Use of a calcium carbonate as a rheology regulator according to claim 1, wherein this is a natural calcium carbonate, ground to a high degree of fineness, with a specific surface area of 22 m²/g, measured using the BET method in accordance with standard ISO 4652.

6. Use of a calcium carbonate as a rheology regulator according to claim 1, wherein this is a natural calcium carbonate, ground to a high degree of fineness, with a specific surface area of 28 m²/g, measured using the BET method in accordance with standard ISO 4652.

7. Use of a calcium carbonate as a rheology regulator according to any of claims 1 to 6, wherein the natural calcium carbonate is treated using at least one fatty acid containing 10 to 24 carbon atoms or its chosen salt from amongst the salts of calcium, magnesium, zinc, or a mixture of these and more specifically using stearic acid or its calcium salt in a proportion in the region of 0.01% to 5% by weight.

8. Use of a calcium carbonate as a rheology regulator according to claim 7, wherein the natural calcium carbonate is treated using at least one fatty acid containing 10 to 24 atoms of carbon or its chosen salt from amongst the salts of calcium, magnesium, zinc, or a mixture of these and more specifically using stearic acid or its calcium salt in a proportion in the region of 1% to 4% by weight.

9. Use of a calcium carbonate as a rheology regulator according to any of claims 1 to 8, wherein it has an oil absorption value of above 16, measured in accordance with standard ISO 787-V (rub-out method).

## Patentansprüche

1. Verwendung eines Calciumcarbonats als Rheologieregler für Plastisol, **dadurch gekennzeichnet, dass** es sich um ein natürliches, sehr fein gemahlenes Calciumcarbonat mit einer spezifischen Oberfläche in einer Größenordnung von 14 bis 30 m²/g, bevorzugt in einer Größenordnung von 16 bis 24 m²/g und besonders bevorzugt in einer Größenordnung von 20 m²/g, gemessen nach dem BET Verfahren der ISO Norm 4652, handelt.

2. Verwendung eines Calciumcarbonats als Rheologieregler gemäß Anspruch 1, **dadurch gekennzeichnet, dass** es sich um ein natürliches, sehr fein gemahlenes Calciumcarbonat mit einer spezifischen Oberfläche von 14.4 m²/g, gemessen nach dem BET Verfahren der ISO Norm 4652, handelt.

3. Verwendung eines Calciumcarbonats als Rheologieregler gemäß Anspruch 1, **dadurch gekennzeichnet, dass** es sich um ein natürliches, sehr fein gemahlenes Calciumcarbonat mit einer spezifischen Oberfläche von 16 m²/g, gemessen nach dem BET Verfahren der ISO Norm 4652, handelt.

4. Verwendung eines Calciumcarbonats als Rheologieregler gemäß Anspruch 1, **dadurch gekennzeichnet, dass** es sich um ein natürliches, sehr fein gemahlenes Calciumcarbonat mit einer spezifischen Oberfläche von 16.5 m²/g, gemessen nach dem BET Verfahren der ISO Norm 4652, handelt.

5. Verwendung eines Calciumcarbonats als Rheologieregler gemäß Anspruch 1, **dadurch gekennzeichnet, dass** es sich um ein natürliches, sehr fein gemahlenes Calciumcarbonat mit einer spezifischen Oberfläche von 22 m²/g, gemessen nach dem BET Verfahren der ISO Norm 4652, handelt.

6. Verwendung eines Calciumcarbonats als Rheologieregler gemäß Anspruch 1, **dadurch gekennzeichnet, dass** es sich um ein natürliches, sehr fein gemahlenes Calciumcarbonat mit einer spezifischen Oberfläche von 28 m²/g, gemessen nach dem BET Verfahren der ISO Norm 4652, handelt.

7. Verwendung eines Calciumcarbonats als Rheologieregler gemäß irgendeinem der Ansprüche 1 bis 6, **dadurch gekennzeichnet, dass** es sich um ein natürliches Calciumcarbonat handelt, das mit mindestens einer Fettsäure enthaltend 10 bis 24 Kohlenstoffatome oder ihrem Salz ausgewählt aus den Calcium-, Magnesium-, Zinksalzen oder Mischungen davon, und insbesondere mit Stearinsäure oder ihrem Calciumsalz in einer Menge in der Größenordnung von 0.01 Gew.-% bis 5 Gew.-% behandelt wurde.

8. Verwendung eines Calciumcarbonats als Rheologieregler gemäß Anspruch 7, **dadurch gekennzeichnet, dass** es sich um ein natürliches Calciumcarbonat handelt, das mit mindestens einer Fettsäure enthaltend 10 bis 24 Kohlenstoffatome oder ihrem Salz ausgewählt aus den Calcium-, Magnesium-, Zinksalzen oder Mischungen davon, und insbesondere mit Stearinsäure oder ihrem Calciumsalz in einer Menge in der Größenordnung von 1 Gew.-% bis 4 Gew.-% behandelt wurde.

9. Verwendung eines Calciumcarbonats als Rheologieregler gemäß irgendeinem der Ansprüche 1 bis 8, **dadurch gekennzeichnet, dass** es eine Ölzahl von mehr als 16 gemessen nach der ISO 787-V Norm (Rub-out method) aufweist.
